Europäisches Patentamt

European Patent Office

Office européen des brevets

(19)

(11) Publication number: **0 040 945**
A1

(12) # EUROPEAN PATENT APPLICATION

(21) Application number: 81302206.8

(22) Date of filing: 19.05.81

(51) Int. Cl.³: **B 60 T 13/24**

(30) Priority: 22.05.80 GB 8016878

(71) Applicant: LUCAS INDUSTRIES LIMITED, Great King Street, Birmingham, B19 2XF (GB)

(43) Date of publication of application: 02.12.81 Bulletin 81/48

(72) Inventor: Lawson, Thomas Gordon, 448 Barrows Lane, Sheldon Birmingham, B26 1QL (GB)

(74) Representative: Lomas, Geoffrey Michael et al, BARKER, BRETTELL & DUNCAN 138 Hagley Road Edgbaston, Birmingham B16 9PW (GB)

(84) Designated Contracting States: DE FR IT

(54) Boosted master cylinder assemblies for vehicle braking systems.

(57) A master cylinder housing (36) is connected to mounting studs (4) at the rear wall (3) of a booster housing (5) by a tubular force transmitting member (23) which substantially relieves the booster housing of braking reaction forces. The front end (48) of the tubular member (23) is rigidly secured to the master cylinder housing (36), and, in order to provide for axial adjustment of the master cylinder housing (36) relative to the output rod (77) of the booster (2), the rear end of the tubular member (23) is threadedly secured to a co-axial adjuster ring (56) which is held against axial movement relative to the mounting studs (4). The rear end of the adjuster ring (56) is exposed and provided with teeth (57) which may be engaged by a suitable tool to turn the adjuster ring.

### BOOSTED MASTER CYLINDER ASSEMBLIES
### FOR VEHICLE BRAKING SYSTEMS

This invention relates to boosted master cylinder assemblies for vehicle braking systems and of the kind comprising an hydraulic master cylinder comprising a master cylinder housing provided with a bore in which is slidable a master cylinder piston, and the servo booster comprising a servo booster housing, a movable wall, and an output member which is adapted to apply a force to the master cylinder piston. Such a boosted master cylinder assembly will hereinafter be referred to as "a boosted master cylinder assembly of the kind set forth".

In published Patent Application G.B. No. 2009871A various servo boosters are disclosed which incorporate a force transmitting means which extends through the movable wall of the booster from the front booster housing wall to the rear booster housing wall. The force transmitting means is stationary in use with respect to the vehicle and transmits braking reaction forces from the master cylinder housing to the vehicle bulkhead substantially to relieve the booster housing of the reaction forces and enable the use of a lightweight booster housing.

In published Patent Application G.B. No. 2031086 we have proposed a servo booster in which the force transmitting means comprises a tube which is co-axial with the booster output and input members.

A first aspect of the present invention is concerned with the adjustment of the retracted position of the master cylinder piston in a boosted master cylinder assembly of the kind set forth and which incorporates a tubular force transmitting member.

When the master cylinder includes a recuperation valve responsive to the axial position of the master cylinder piston in the bore it is important that in the retracted position of the master cylinder piston the recuperation valve should be open to provide fluid communication between an hydraulic reservoir and the pressure space of the master cylinder. In the usual arrangement the master cylinder incorporates a spring which biases the master cylinder piston rearwardly against a stop in the master cylinder, and the booster incorporates a further spring which biases the movable wall and the booster output rod rearwardly against a further stop in the booster housing. It is necessary to ensure that the front end of the output rod in its retracted position does not hold the master cylinder piston off its stop, and also to ensure that there is not, on the other hand, a large axial spacing between the retracted piston and output rod. Since the retracted position of the front end of the output rod relative to the master cylinder housing is determined by the tolerances in a large number of dimensions in the master cylinder and booster it has usually been necessary to provide some means of adjusting the retracted position of the front end of the output rod, and the adjustment means, which often comprises a screw or shims, of each booster has required individual setting. This is a costly operation.

In our Patent Application G.B. No. 7848192 dated 12.12.78, publication No. 2037918, we have proposed the use of a threaded connection between the rear end of a master cylinder housing and the front end of a tubular force transmitting member. In order to adjust the retracted position of the master cylinder piston the master cylinder housing is turned relative to the booster. Whilst that arrangement is acceptable in many cases, a disadvantage is that the angular orientation of the mounting studs on the rear end of the booster relative to that of the master cylinder assembly is altered by the adjustment action, so that only discreet adjusted positions are permitted if the orientation of the master cylinder in the vehicle is predetermined.

According to one aspect of the invention a boosted master cylinder assembly of the kind set forth comprises a tubular force transmitting member which extends through the movable wall of the booster, the tubular member is connected at its front end to the master cylinder housing and is threadedly connected at its rear end to a rotatable adjuster ring which is constrained against axial movement relative to a mounting member of the booster that is adapted to be connected to a vehicle bulkhead.

Thus rotation of the adjuster ring brings about axial movement of the tubular member and master cylinder housing relative to the mounting member, and consequently movement of the retracted master cylinder piston relative to the master cylinder housing. Since the adjuster ring rotates relative to the mounting member, the master cylinder housing and the mounting member can be maintained in a fixed angular orientation relative to one another.

Although the ring could be located internally of the rear end of the tubular member, it is preferably located around the tubular member and is provided with internal threads engaged with external threads provided on the tubular member.

The mounting member may simply be constituted by the rear wall of the booster housing, or it may be a mounting plate which is located adjacent to said rear wall.

The adjuster ring is preferably constrained against axial movement relative to the mounting member in one direction by engagement of a shoulder on the ring with a first abutment face on the mounting member, and in the opposite direction by engagement of a locking ring attached to the abutment ring with a second abutment face on the mounting member, the first and second abutment faces facing in opposite directions.

In one preferred arrangement the abutment faces are provided by the opposite surfaces of the radially inner marginal portion of a mounting plate, and in another preferred arrangement the abutment faces are provided by the opposed outer walls of an annular trough-shaped portion of a tubular-extension to the rear wall of the booster housing.

The adjuster ring is preferably shaped to retain an annular seal in sealing engagement with a valve body of the booster, and the adjuster ring is sealed by a further annular seal to the rear housing wall to complete a seal between the valve body and the rear housing wall. This arrangement has the advantage that in the assembled booster the adjuster ring is accessible to enable adjustment of the retracted position of the master cylinder piston.

In order to permit axial movement of the tubular member and master cylinder housing relative to the front wall of the booster housing, a sliding seal may be arranged directly or indirectly between the front wall of the booster housing and either the master cylinder housing or the front end of the tubular member.

In one preferred arrangement the tubular member is provided at its front end with an annular disc to which the master cylinder housing is secured and which provides a radially inner portion of the front booster housing wall, and the disc is provided at its radially outer periphery with an axially directed flange which is slidingly sealed to a radially outer, fixed portion of the front booster housing wall.

According to a second aspect of the invention in a boosted master cylinder assembly of the kind set forth the booster output member is connected to the master cylinder piston by resilient means which is arranged such that on relative axial movement apart of the master cylinder piston and booster output rod a force is exerted between the piston and output rod to bias them relatively together.

On a fast retraction of the output rod of the booster the resilient means applies an increased retractive force to the master cylinder piston which assists in reducing the brake pressure as quickly as possible, yet enables some relative movement between the booster output rod and the master cylinder piston.

The resilient means preferably comprises a compression spring which is mounted on the output rod and engages at its front end with an abutment on the output rod and at its rear end with a further abutment provided on a tubular extension of the master cylinder piston.

Two boosted master cylinder assemblies in accordance with the invention will now be described, by way of example only, with reference to the accompanying drawings in which:-

Figure 1 is a longitudinal cross-section of a first
assembly with the movable wall of the booster and
the pistons of the master cylinder being shown in
their retracted positions;  and

Figure 2 is a similar view of a second assembly.

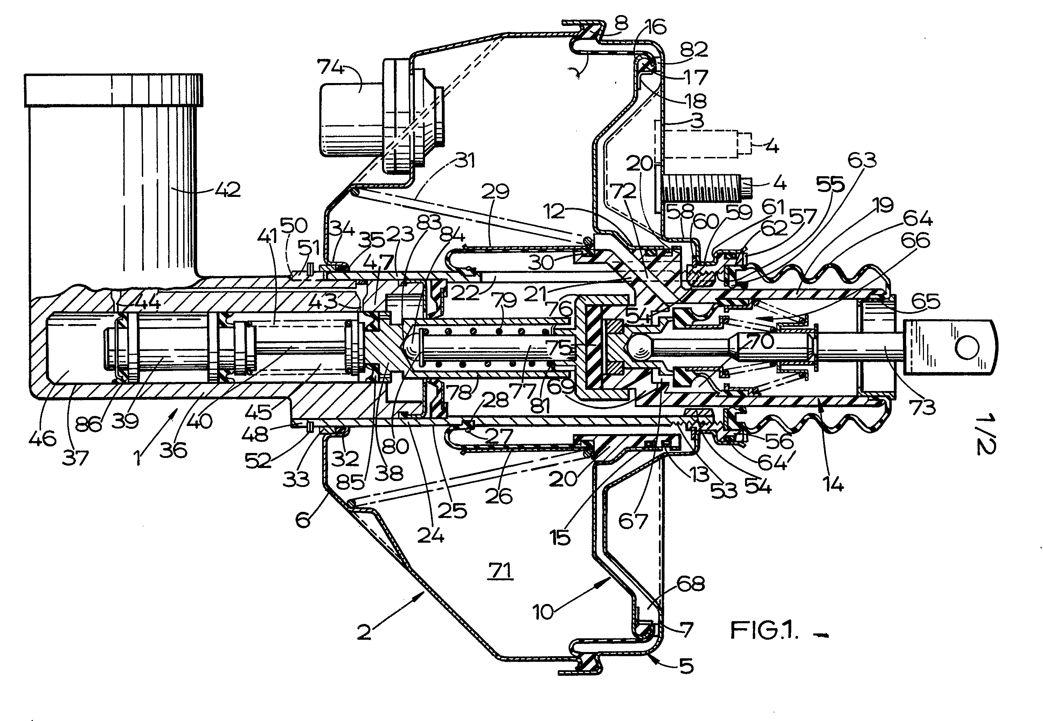

Referring to Figure 1, the boosted master cylinder
assembly comprises a substantially conventional tandem
master cylinder 1 carried by a vacuum servo booster 2 of
which the rear booster housing wall 3 is adapted to be
connected to a vehicle bulkhead, not shown, by a series
of depending, circumferentially spaced studs 4.  The
housing 5 of the booster comprises front and rear metal
shells 6 and 7 respectively between the outer peripheries of which is trapped the peripheral bead 8 of a
flexible diaphragm 9 of a booster movable wall 10.  The
movable wall 10 further comprises a metal piston
plate 11 which is provided with a rearwardly extending
sleeve 12 secured by tags 13 to a generally cylindrical
valve body 14 and sealed thereto by an annular seal 15
located in an annular recess of the valve body 14.  The
radially outer periphery 16 of piston plate 11 is turned
over to define a radially inwardly facing annular trough
in which further peripheral bead 17 of diaphragm 9 is
retained by a retaining ring 18 of L-shape in transverse
cross-section.

Valve body 14 is formed as an integral plastics
moulding and comprises a tubular core 19 and a co-axial
valve body sleeve 20 connected thereto by three circumferentially equally spaced, radially directed arms 21
which pass through respective axially extending slots 22
in a force transmitting tube 23 which is located coaxially of the booster axis.  The slots 22 are open at
their rear ends to enable assembly of the tube 23 around the arms 21, but the front end portion 24 is unapertured, and its radially outer surface 25 acts as a
support surface for a rolling diaphragm 26 which seals
the front end of valve body sleeve 20 to tube portion 24.
Diaphragm 26 is secured to tube portion 24 by a wire
ring 27 which retains a first peripheral bead 28 of the
diaphragm 26 in an external annular recess in tube
portion 24, and to the front end of valve body sleeve 20
by a metal diaphragm support sleeve 29 which retains a
second peripheral bead 30 of the diaphragm 26 in an
external annular recess of valve body sleeve 20.
Sleeve 29 itself is retained in place by a coiled compression spring 31 which bears at its front end on front
shell 6 and at its rear end on a peripheral flange on
sleeve 29. It will be appreciated that spring 31 is the
return spring for the movable wall 10, and that diaphragm 26 rolls from the internal surface of sleeve 29
to the external surface of tube portion 24 on forward
movement of the movable wall 10.

Tube portion 24 extends slidably, for adjustment
purposes, through a central aperture in front shell 6
and is sealed thereto by an annular seal 32 which is
trapped by a retaining ring 33 in an annular recess
defined by a rearwardly directed sleeve portion 34 of
shell 6 and by a radially inwardly directed flange 35
provided at the rear end of sleeve portion 34.

Master cylinder 1 comprises a housing 36 provided
with a cylinder bore 37 in which work primary and secondary master cylinder pistons 38 and 39 respectively
which are connected, in a well known manner, by a lost-
motion connection 40 and are resiliently biassed apart
by a coiled compression spring 41. The master cylinder
housing 36 also incorporates a conventional tandem fluid
reservoir 42, not sectioned in the drawing, of which the outlets are connected to recuperation ports 43 and 44 in wall of bore 37 to communicate respectively with primary and secondary master cylinder pressure spaces 45 and 46 when the pistons are in their retracted positions shown.

The rear end portion 47 of the master cylinder housing 36 is a close fit within the bore of tube portion 24, and that part 48 of tube portion 23 which protrudes from housing shell 6 is provided with a series of circumferentially spaced axially extending slots 50 which receive complementarily shaped lugs 51 formed on the master cylinder housing 36, and a locking ring 52 is seated in contiguous circumferentially extending slots provided in the radially outer surfaces of the lugs 51 and of the tube part 48, to lock the tube 23 rigidly to the master cylinder housing 36.

The tube 23 at its rear end is formed externally with screw threads 53 engaged by complementary internal threads 55 formed on a rotatable adjuster ring 56 which is held against axial movement relative to the mounting studs 4. Consequently, angular movement of the adjuster ring 56 by engagement of a suitable tool with teeth 57 formed on the exposed rear end of the ring 56 brings about axial movement of the tube 23 and master cylinder housing 36 relative to the rear housing wall 3 and studs 4. Adjuster ring 56 is housed within a rearwardly extending tubular extension 58 to the rear housing shell 7, and the extension 58 is shaped to define a substantial radially inwardly directed rib 59 of trough-shape in transverse cross-section of which the front face engages with an abutment ring 60 received in a recess in ring 56, and the rear face engages with a step 61 on the adjuster ring to hold the adjuster ring against axial movement.

At its rear end the adjuster ring 56 is provided with a counterbore 62 in which is located an annular seal 63 of C-shape in transverse cross-section which is integrally connected to the front end of a boot 64 of which the rear end is secured to the rear end of the valve body core 19 by a retaining ring 65. Seal 63 provides a sliding seal between the adjuster ring 56 and the radially outer surface of valve body core 19, and the sealing of the valve body core 19 to the extension 58 is completed by an annular seal 64' located in an external annular recess in the adjuster ring 56 rearwardly of the step 61. The adjustment of adjuster ring 56 would normally be carried out before the boot 64 is assembled to the booster in order to prevent twisting of the boot.

A substantially conventional poppet valve assembly 66 is located in the bore of valve body core 19, and a first valve chamber 67 is permanently connected to the rear booster chamber 68 by way of an inclined bore 69 in core 19 and by slots 22 in the tube 23. A second valve chamber 70 is permanently connected to front booster chamber 71 by a further inclined bore 72 extending through one of the arms 21 and through the sleeve 20 rearwardly adjacent to seal 30. In the retracted position, shown, of pedal-operated input rod 73 the valve chambers 67 and 70 are in communication with each other, and booster chambers 71 and 68 are both connected to vacuum by way of a vacuum inlet 74, but on forward movement of the input rod 73 the chambers 67 and 70 are isolated from each other, and chamber 67 is connected to atmosphere to admit atmospheric air to rear booster chamber 68.

An elastomeric reaction disc 75 is located within a cup 76 fitted over the front end of valve body core 19, and the base of the cup is rigidly secured to the rear end of a booster output rod 77 which is received with radial clearance within a tubular rearwardly directed extension 78 of primary piston 38. Extension 78 is sealed to the interior of tube portion 24 by an annular seal assembly 93. A coiled compression spring 79 is mounted on the rod 77 with its front end abutting a ring 80 secured to the output rod adjacent to its free end 84, and with its rear end abutting a sprag ring 81 jammed in the rear end of piston extension 78. Movable wall 10 is biassed by spring 31 to its retracted position determined by abutment of circumferentially spaced projections 82 provided on diaphragm 9 with the rear wall 3, and spring 79 urges primary piston 38 to a retracted position determined by engagement of the free end 84 of the output rod 77 with the end wall of the bore in piston extension 78. Spring 79 also draws secondary piston 39 to its retracted position by the action of lost-motion connection 40.

In Figure 1 the seal 85 on the primary piston 38 is shown in its correctly adjusted retracted position in which its sealing lip is located just rearwardly of recuperation port 43 so that communication between port 43 and primary pressure space 45 will be cut off on initial forward movement of the primary piston 38. This is the condition which gives the minimum lost travel of the input rod 73 before the brakes are applied.

Adjustment of the retracted position of the primary piston 38 will now be described. An air supply is connected to the outlet port, not shown, from primary pressure space 45 and the air flow into reservoir 42 by way of port 43 is monitored in any convenient manner.

Adjuster ring 56 is turned in a clockwise direction, as viewed from the rear of the booster, with the result that the force transmitting tube 23 and the master cylinder housing 36 are drawn rearwardly relative to the rod 77 and primary piston 38, as accommodated by the sliding seal 32, until the air flow through port 43 is just cut off by seal 85. The adjuster ring 56 is then turned by a predetermined amount in the reverse direction to bring the port 43 to the adjusted position shown. The length of the secondary piston 39 and the extended length of the lost-motion connection 40 are carefully controlled in manufacture to ensure that when the primary piston is correctly adjusted the seal 86 on the secondary piston is correctly positioned relative to port 44.

Adjuster ring 56 is then locked in its adjusted position by insertion of an annular locking ring 54 into the rear end of tube 23. Locking ring 54 is provided with three circumferentially spaced, radially outwardly directed projections 54' which are recieved within the rear ends of the respective slots 22 and which are provided with serrations to lock with threads 55.

The spring 79 provides a resilient connection between the booster output rod 77 and the primary master cylinder piston 38 which permits relative movement apart of the rod 77 and piston 38 but which exerts a progressively increasing force urging them together on their progressive displacement apart. If the brakes are required to be released quickly then release of pedal pressure on the input rod 73 will result in speedy return of the booster movable wall 10 to its retracted position. Separation of the free end 84 of the output rod from the piston wall 83 during retraction of the movable wall will bring about an increased retractive force applied by spring 79 to the primary piston, so as to tend to draw the pistons 38 and 39 rearwardly with the movable wall 10. Thus the master cylinder pistons are allowed to return at a more controlled rate than would be the case if the booster output rod were to be rigidly connected to the primary master cylinder piston, and this assists in avoiding vacuum draw conditions in the master cylinder pressure space 45 which might otherwise lead to air being sucked past seal 85 into the brake fluid.

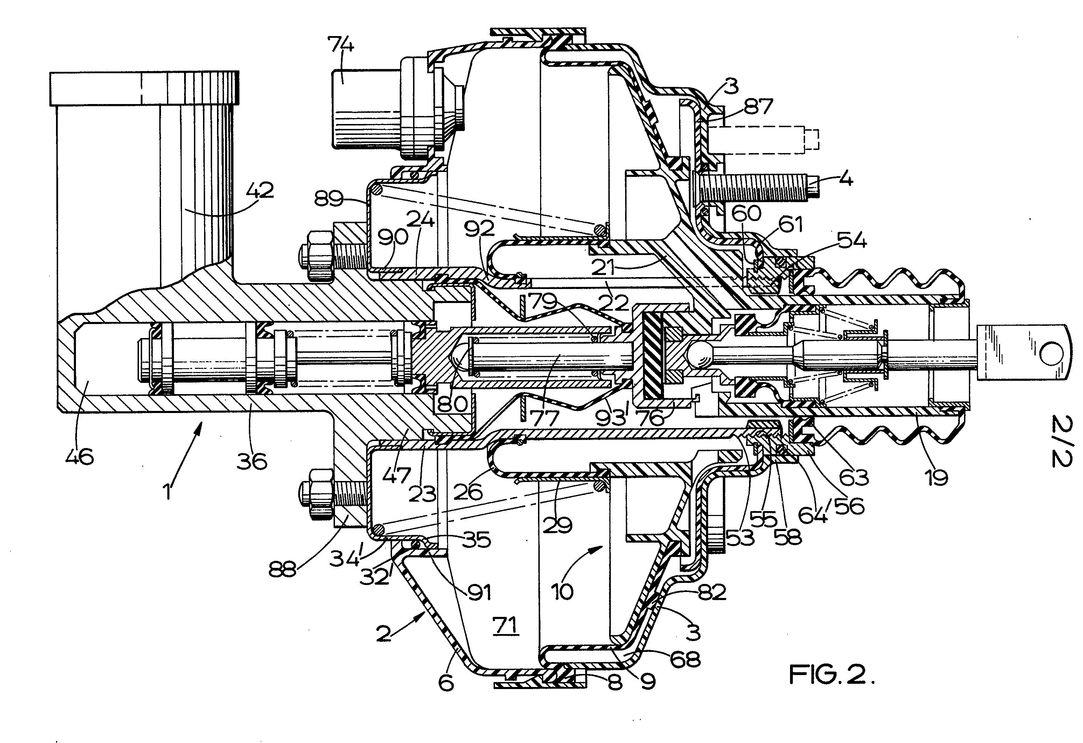

Figure 2 shows an assembly which is similar to that of Figure 1, but which incorporates moulded plastics housing shells for the booster. Parts corresponding to those of the assembly of Figure 1 have been given corresponding reference numerals. In this construction the mounting studs 4 are carried by an annular metal support plate 87 which is shaped to fit the inner surface of the rear housing wall 3, and the adjuster ring 56 is held against axial movement relative to the studs 4 by engagement of the ring 60 and shoulder 61 with the opposed faces of the radially inner peripheral portion of plate 87.

The other main differences between the assembly of Figure 2 and that of Figure 1 are the manner in which the master cylinder housing 36 is connected to the tube 23 and the location of the sliding seal 32. In the Figure 2 construction the master cylinder housing 36 is provided with a conventional mounting flange 88 which is connected to studs carried by an annular metal disc 89 which serves as the central portion of the front wall of the booster housing and is rigidly secured by an integral, rearwardly directed sleeve 90 to the front end of the tube 23. The disc 89 is provided at its radially outer periphery with a rearwardly directed skirt 34' which is slidably sealed by a seal 32' to a complementary skirt 91 provided on a moulded plastics, annular front housing shell 6.

Also, the front tube portion 24 is stepped with an inclined step 92 to accommodate the end portion 47 of the master cylinder housing which for convenience in manufacture is made of larger diameter, and a bellows seal assembly 93' is employed instead of the sliding seal 93 of Figure 1 to seal rear chamber 68 from atmosphere in the unactuated condition of the booster.

0040945

## CLAIMS

1.  A boosted master cylinder assembly for vehicle braking systems comprising an hydraulic master cylinder and a servo booster, the master cylinder comprising a master cylinder housing provided with a bore in which is slidable a master cylinder piston, the servo booster comprising a servo booster housing, a movable wall, an output member acting on the master cylinder piston, and a force transmitting tube which extends through the movable wall of the booster and is connected at its front end to the master cylinder housing, characterised in that the rear end (53) of the tube is threadedly connected to a rotatable adjuster ring (56) which is constrained against axial movement relative to a mounting member (3, 4; 87, 4) of the booster.

2.  An assembly as claimed in claim 1 in which the ring is located around the tube (23) and is provided with internal threads (55) engaged with external threads (53) provided on the tube.

3.  An assembly as claimed in claim 1 or claim 2 in which the mounting member comprises a mounting plate (87) which is located adjacent to the rear wall (3) of the booster housing.

4.  An assembly as claimed in any of the preceding claims in which the adjuster ring is constrained against axial movement relative to the mounting member in one direction by engagement of a step (61) on the ring with a first abutment face on the mounting member, and in the opposite direction by engagement of a locking ring (60) attached to the abutment ring with a second abutment face on the mounting member, the first and second abutment faces facing in opposite directions.

5.   An assembly as claimed in claim 4 as appended to claim 3 in which the abutment faces are respectively provided by the opposite surfaces of the radially inner marginal portion of the mounting plate.

6.   An assembly as claimed in claim 4 in which the abutment faces are provided by the opposed outer walls of an annular trough-shaped portion (59) of a tubular-extension (58) to the rear wall of the booster housing.

7.   An assembly as claimed in any of the preceding claims in which the adjuster ring is shaped to retain an annular seal (63) in sealing engagement with a valve body (14) of the booster, and the adjuster ring is sealed by a further annular seal (64) to the rear housing wall to complete a seal between the valve body and the rear housing wall.

8.   An assembly as claimed in any of the preceding claims in which a sliding seal (32; 32') is arranged directly or indirectly between the front wall (6) of the booster housing and either the master cylinder housing or the front end of the tubular member, to permit axial movement of the tubular member and master cylinder housing relative to the front wall of the booster housing.

9.   An assembly as claimed in claim 8 in which the tubular member is provided at its front end with an annular disc (89) to which the master cylinder housing is secured and which provides a radially inner portion of the front booster housing wall, and the disc is provided at its radially outer periphery with an axially directed flange (34') which is slidingly sealed to a radially outer, fixed portion of the front booster housing wall.

10. A boosted master cylinder assembly for vehicle braking systems comprising an hydraulic master cylinder comprising a master cylinder housing provided with a bore in which is slidable a master cylinder piston, and a servo booster comprising a servo booster housing, a movable wall, and an output member which is adapted to apply a force to the master cylinder piston, characterised in that the booster output member is connected to the master cylinder piston by resilient means (79) which is arranged such that on relative axial movement apart of the master cylinder piston (38) and booster output rod (77) a force is exerted between the piston and output rod to bias them relatively together.

FIG.1.

1/2

0040945

FIG.2.

## DOCUMENTS CONSIDERED TO BE RELEVANT

| Category | Citation of document with indication, where appropriate, of relevant passages | Relevant to claim |
|---|---|---|
| | DE - A - 1 925 531 (MULLER) <br> * Page 3, line 35 - page 4, line 32; figure 1 * | 10 |
| A | GB - A - 2 022 209 (TOKICO LTD) | 1 |
| A | DE - A - 2 837 911 (TEVES GmbH) | 1 |
| AD | GB - A - 2 031 086 (LUCAS INDUSTRIES LTD) | 1 |
| AD | GB - A - 2 009 871 (GIRLING LTD) | 1 |
| D | GB - A - 2 037 918 (LUCAS INDUSTRIES LTD) | 1 |

**CLASSIFICATION OF THE APPLICATION (Int. Cl.³)**

B 60 T 13/24

**TECHNICAL FIELDS SEARCHED (Int. Cl.³)**

B 60 T 13/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21-08-1981 | BRAEMS |

EPO Form 1503.1  06.78